# EUROPEAN PATENT APPLICATION

(11) **EP 0 999 683 A2**
(43) Date of publication of application: **10.05.2000**
(21) Application number: 99121562.5
(22) Date of filing: 29.10.1999
(51) Int. Cl.: H04M 1/725, H04M 1/65

(54) **Communication apparatus**

(30) Priority: 02.11.1998 JP 32583898; 08.12.1998 JP 34844698; 08.07.1999 JP 19495299
(71) Applicant: CANON KABUSHIKI KAISHA, Tokyo (JP)
(72) Inventor: Kenmochi, Toshio, Ohta-ku, Tokyo (JP); Inoue, Yutaka, Ohta-ku, Tokyo (JP); Izumi, Michihiro, Ohta-ku, Tokyo (JP)
(74) Representative: Trösch, Hans-Ludwig

(57) **Abstract**

In the event that an audio recording/reproducing unit is operating at the time of a reception, and the object of action of the audio recording/reproducing unit is an external line, a RELCOMP is sent to the network, and reception is rejected. On the other hand, in the event that the object of action of the audio recording/reproducing unit is not an external line, a CONNECT is sent to the network, the reception is responded to, a response message is sent to the line from the audio recording/reproducing unit, and recording is performed.

## Description

### BACKGROUND OF THE INVENTION

### Field of the invention

The present invention relates to a communication apparatus that has a memory and that performs input/output of signals between communication channels and the memory.

### Description of the Related Art

There are many telephones and consumer-grade facsimile apparatuses available on the market that have recording functions. Some of such telephones with recording functions are arranged so that in the event that a call is received while an operator is reproducing a recorded message, the reproducing of the message by the operator is interrupted.

Also, Japanese Patent Laid-Open No. 8-307557 discloses a communication apparatus that does not ring upon reception in the event that a recording is being reproduced. However, this apparatus does not permit a speedy response to reception from an external line while a recording is being reproduced.

Also, there are communication apparatuses that hold two or more telephone lines, such as ISDN lines or the like. However, conventionally, thought had not been given to the issue of how communication apparatuses that hold two or more telephone lines and that have recording functions should act regarding reception.

Japanese Patent Laid-Open No. 7-336413 and Japanese Patent Laid-Open No. 9-238204 disclose communication apparatuses having response message sending functions and connected to a communication line having communication channels of two lines.

Of these, the communication apparatus described in Japanese Patent Laid-Open No. 7-336413 is arranged such that in the event that there is reception when the apparatus is in the answering mode, a response message is sent out. Then, a message from the terminal apparatus of the calling party is stored. Also, the ISDN originating number display function is used to store the telephone number of the other party. Next, a certain number is transmitted from the communication line, and notification is made of the stored number of the other party informing that a recording message has been received.

Also, the communication apparatus described in Japanese Patent Laid-Open No. 9-238204 is arranged such that in the event that there is reception when in the answering mode, the receiving line is put on hold, and a pager is called with the other line notifying the user that a call has been received. Then, the line used for calling the pager is released, and in the event that there is reception from that line, that line and the line put on hold are connected, thus putting the call through.

However, the above-described communication apparatuses only take into consideration response messages for when the user is not at home, and accordingly, cases wherein the user is at home and using one of the two lines so that the response cannot be made were not taken into consideration.

Also, with the above-described communication apparatuses, in the event that there is reception on one line while the other channel is recording a message, responding still would not enable the calling party to record a message, thereby running up the telephone bill of the other party for no reason. Generally, the above problem occurs in the event that a single function is dominated by a single channel.

### SUMMARY OF THE INVENTION

It is an object of the present invention to provide a communication apparatus that appropriately responds to reception of calls.

Another object of the present invention is to appropriately respond to reception of calls according to whether a message storing means is conducting a remote action or a local action.

Another object of the present invention is to prevent remote action from being conducted by the message storing means via a line, by reception of a call, and also to appropriately respond to reception of calls arriving when remote action is not being conducted by the message storing means.

Another object of the present invention is to send out appropriate messages for the respective cases of the user being away from home and the user using a line.

Another object of the present invention is to prevent an inappropriate response from being made in the event that a call is received when a message cannot be sent.

Other objects of the present invention will become apparent from the description of the following embodiments.

### BRIEF DESCRIPTION OF THE DRAWINGS

Fig. 1 is a system configuration diagram of a communication apparatus according to an embodiment of the present invention;
Fig. 2 is a block diagram illustrating the configuration of the communication apparatus according to an embodiment of the present invention;
Fig. 3 is an internal block diagram of a PHS processing unit;
Fig. 4 is an action flowchart of the communication apparatus according to an embodiment of the present invention;
Fig. 5 is an external perspective diagram illustrating a configuration of an operating unit of a facsimile apparatus;
Fig. 6 is a flowchart illustrating an operation of a facsimile apparatus according to an embodiment of the present invention; and
Fig. 7 is a flowchart illustrating another example of an operation of a facsimile apparatus according to an embodiment of the present invention.

### DESCRIPTION OF THE PREFERRED EMBODIMENTS

The following is a detailed description of the embodiments of the present invention with reference to the drawings.

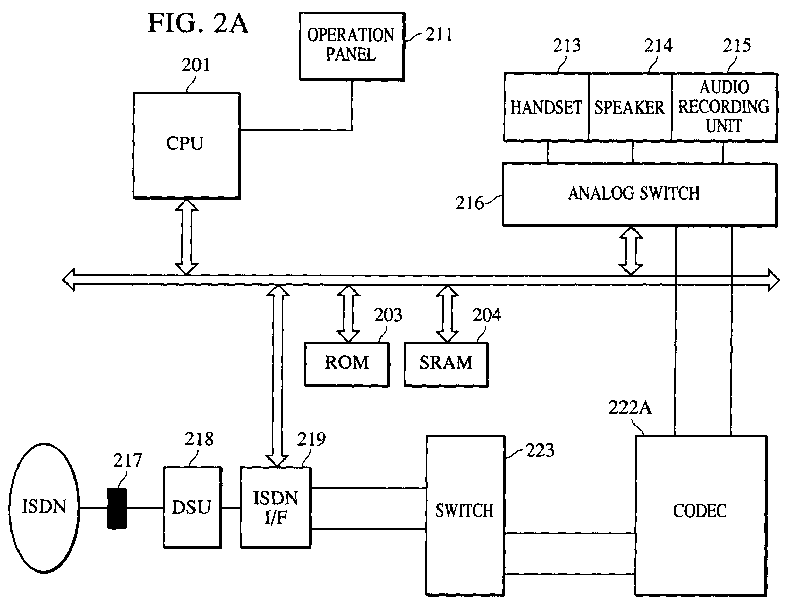

Fig. 2A shows the basic configuration of a recording telephone, which is a communication apparatus according to an embodiment of the present invention.

In Fig. 2A, reference numeral 103 denotes an ISDN line, which is a digital public communications line. Also, reference numeral 201 denotes a central processing unit (CPU) configured of a micro-computer.

Reference numeral 203 denotes a ROM (read-only memory), which stores programs for the CPU 201 to operate on, and so forth. The ROM 203 is a storage medium enabling the programs for the CPU 201 which is a micro-computer to be stored in a readable manner. The CPU 201 reads programs from the ROM 203 and acts thereupon.

Reference numeral 204 is a RAM (random-access memory), temporarily storing data to be used for computation by the CPU 201, computation results, and so forth.

Reference numeral 211 denotes an operation panel, 213 a handset, and 214 a speaker.

Reference numeral 215 denotes an audio recording/reproducing unit that is internally comprised of an analog/digital converting unit and a memory. The audio recording/reproducing unit 215 is controlled by the CPU 201.

Reference numeral 216 is an analog switch for selectively connecting the handset 213, the speaker 214, and the audio recording/reproducing unit 215 to the ISDN 103 or the telephone 102. Also, messages recorded by the audio recording/reproducing unit 215 can be reproduced through the speaker 214. Also, messages can be recorded to the audio recording/reproducing unit 215 from the microphone in the handset 213.

Reference numeral 217 denotes a modular connector for connecting the ISDN (U-point), and reference point 218 denotes a DSU (Digital Service Unit) for converting the data exchanged between station switchboards into TTL (Transistor-Transistor Logic) level signals.

Reference numeral 219 denotes an ISDN interface, which performs control of ISDN Layer 1 to Layer 3 and has ISDN B-channel data input/output functions.

Reference numeral 220 denotes an HDLC (High-level Data Link Control) controller for performing assembly and decomposition of HDLC format data.

Reference numeral 222A denotes a codec for performing PCM (Pulse Code Modulation) encoding conversion processing.

Reference numeral 223 denotes a path switch-over switch, for connecting the data transferred by the B1 channel and the B2 of the ISDN to the HDLC controller 220, by control of the CPU 201.

Incidentally, in the case of connecting the communication apparatus of the present embodiment to an analog line, the DSU 218 and the HDLC controller 220 are unnecessary, with an analog line interface being required instead of the ISDN interface.

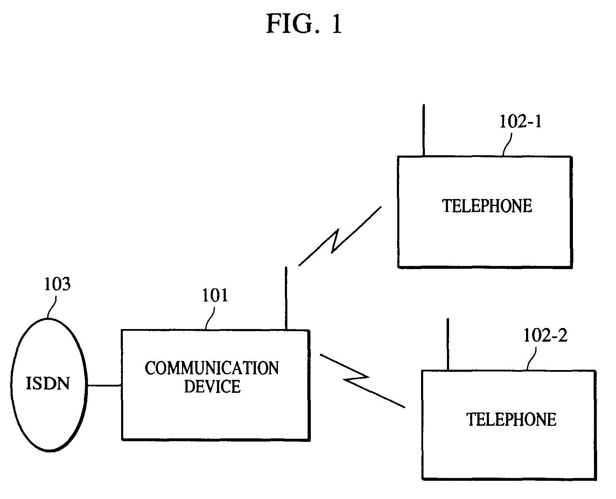

Fig. 1 is a system configuration diagram of an arrangement wherein two telephones can make wireless connection to the communication apparatus of the present embodiment.

In Fig. 1, reference numeral 101 denotes the communication apparatus, 102-1 and 102-2 denote the PHS (Personal Handyphone System) telephones, which are extension slave telephones of the communication apparatus 101, and 103 denotes an ISDN line, which is a digital public telephone line. Incidentally, it should be understood that Fig. 1 illustrates the system configuration of an application example of the present invention, and that the present invention is by no means restricted to an arrangement wherein a communication apparatus connects telephones via wireless lines.

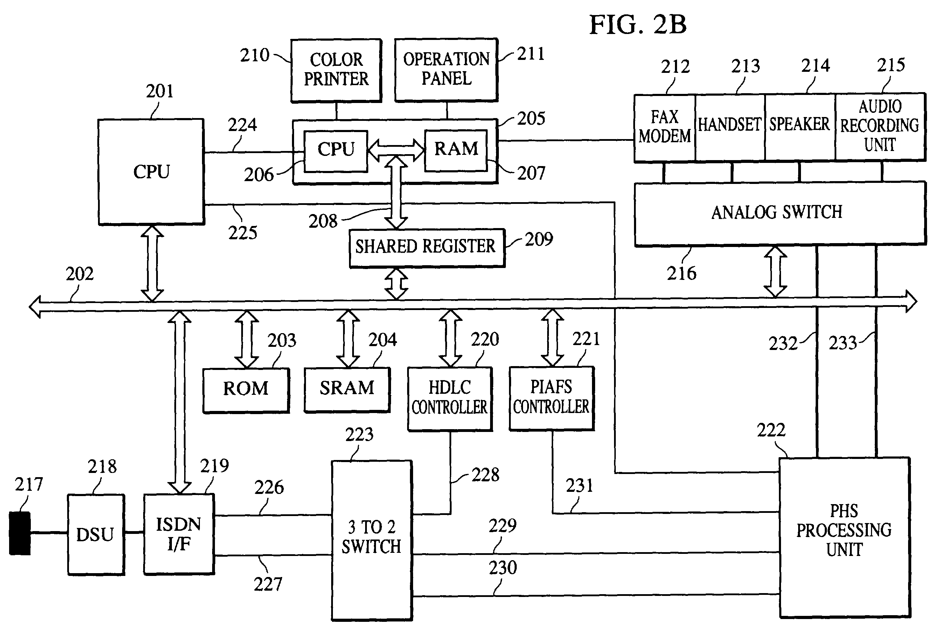

Next, Fig. 2B shows the configuration of a communication apparatus according to the present invention, provided with facsimile communication functions in addition to wireless telephone connection functions. The components in Fig. 2B that are the same as those in Fig. 2A are denoted by the same reference numerals.

In Fig. 2B, reference numeral 201 denotes a central processing unit (CPU), 202 denotes a data bus and address bus, and 203 denotes a ROM (read-only memory) for storing the system start-up program, basic I/O program, and so forth. Reference numeral 204 denotes a RAM (random-access memory).

Reference numeral 205 denotes a FAX engine control unit, 206 denotes a CPU (micro-computer), 207 denotes a RAM, and 208 denotes a data bus for the FAX engine. Reference numeral 209 denotes a shared register for performing exchange of data between the system for the CPU 201 and the system for the CPU 206, reference numeral 210 denotes a color printer, and 211 an operation panel.

Reference numeral 212 denotes a FAX modem, 213 a handset, 214 a speaker, and 215 an audio recording/reproducing unit. The members denoted by the reference numerals 212 through 215 are controlled by the FAX engine controlling unit 205 and are also connected to an analog switch 216 so that audio or facsimile analog data is connected to a public telephone line via the analog switch 216.

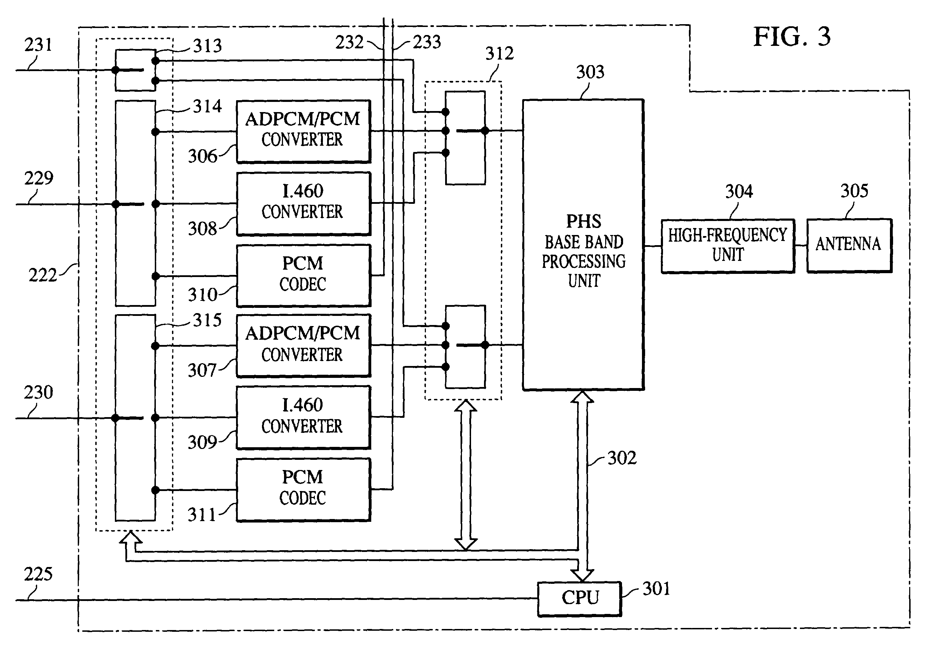

Reference numeral 217 is a modular connector, 218 denotes a DSU, 219 denotes an ISDN interface, and 220 denotes an HDLC controller, which performs assembly/decomposition of HDLC format data for an ISDN. Reference numeral 221 is a wireless data communication protocol processing unit (PIAFS (PHS Internet Access Forum Standard) controller), which performs frame assembly/decomposition for a wireless data communication protocol format. Reference numeral 222 denotes a PHS processing unit, for performing protocol processing for PHS wireless communication, PCM encoding conversion processing, etc., with the details thereof being shown in Fig. 3.

Reference numeral 223 denotes a path switch-over switch for switching between the HDLC controller 220 and the PHS processing unit 222 for the data to be transferred over the ISDN B1 channel and B2 channel, by control of the CPU 201.

Next, description will be made regarding the main signal lines.

Reference numeral 224 denotes a serial communication signal line for performing exchange of control signals between the CPU 201 and the CPU 206, and reference numeral 225 denotes a serial communication signal line for performing exchange of control signals between the CPU 201 and the PHS processing unit 222. Reference numerals 226 and 227 respectively are 64 Kbps serial transfer signal lines for the B1 channel and B2 channel of the ISDN interface 219. Reference numeral 228 is a serial communication signal line for input/output to and from the HDLC controller 220, with HDLC frame format data being transferred.

Reference Numerals 229 and 230 are serial communication signal lines for input/output to the PHS processing unit 222, with a transfer speed of 64 Kbps. Data comprised of 32 Kbps signals transferred from the wireless line converted into 64 Kbps, and analog signals input from the analog switch 216 converted into 64 Kbps PCM data, etc., are transferred. Regarding data transmitted from the PHS 102-1 and 102-2 and output to the ISDN line 103, the data is subjected to speed conversion (I.460) from 32 Kbps to 64 Kbps within the PHS processing unit 222, and is output to the serial communication signal lines 229 and 230.

Reference numeral 231 is a signal line for taking 32 Kbps signals received from the wireless line at the PHS processing unit 222, and outputting the signals as is. This signal line is connected to the PIAFS controller 221.

Reference numerals 232 and 233 are analog signal lines input to the PHS processing unit 222 from the analog switch 216.

Fig. 3 is an internal block diagram of the PHS processing unit 222 shown in Fig. 2.

In Fig. 3, reference numeral 301 denotes a CPU which performs PHS-related control, and has a RAM and a ROM built in. The CPU 301 is connected to the CPU 201 via a serial communication signal line 225. Reference numeral 302 denotes a data bus. Reference numeral 303 denotes a PHS base band processing unit for performing assembly/decomposition processing on PHS transfer frames. The PHS base band processing unit 303 can perform two slots worth of processing on PHS frames. Reference Numeral 304 denotes a high-frequency unit for performing frequency conversion processing in order to transport the data to be transferred in a 1.9 GHz band. Reference numeral 305 denotes an antenna.

Reference numerals 306 and 307 denote ADPCM/PCM (Adaptive Differential Pulse Code Modulation / Pulse Code Modulation) converting units for converting 32 Kbps ADPCM encoding audio data used for PHS wireless transfer into 64 Kbps PCM encoding audio data used for ISDN. Reference numerals 308 and 309 denote I.460 converting units having the function of converting the speed of the data from the 32 Kbps data used for PHS wireless transfer into the 64 Kbps data used for ISDN. Reference numerals 310 and 311 denote PCM codecs, which have the function of converting the analog signals input through the signal lines 232 and 233 from the analog switch 216 into 64 Kbps PCM encoded data.

Incidentally, the codec 222A shown in Fig. 2A has the PCM codecs 310 and 311 shown in Fig. 3 built in.

Reference numeral 312 denotes a switch for selecting what sort of processing is to be applied to the 32 Kbps data output from the PHS base band processing unit 303. Reference numeral 313 is a switch, for selecting which of the two channels of 32 Kbps data output from the PBS base band processing unit 303 is to be connected to the PIAFS controller 221. Reference numerals 314 and 315 are switches, for selecting the data to connect to the respective 64 Kbps transfer paths 229 and 230. The switches 312 through 315 are controlled by the CPU 301.

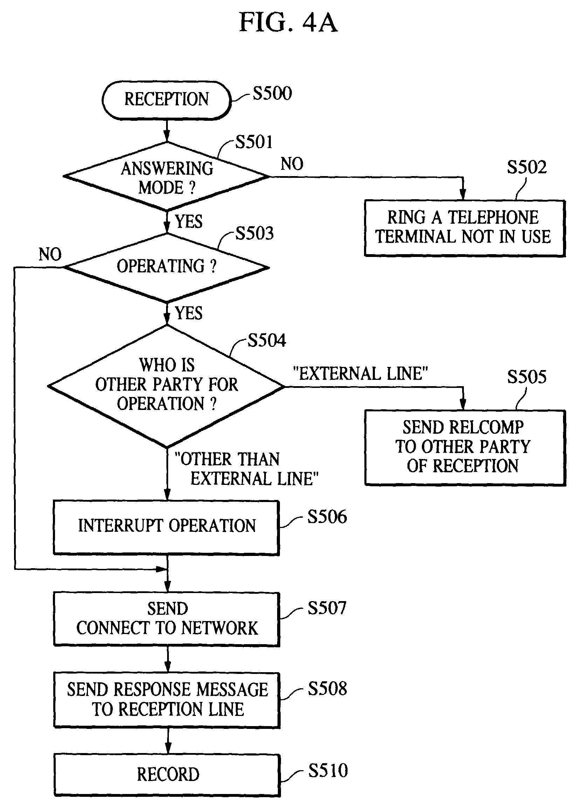

The following is a description of the circuit action with reference to Fig. 4A.

Fig. 4A is an operation flowchart of the communication apparatus relating to the present invention.

The CPU 201 reads the programs stored in the ROM 203, and acts according to the read programs. The flowchart shown in Fig. 4A represents a program stored in the ROM 203.

First, in step S500, upon reception, a "call set" message (SETUP) is sent from the ISDN line 103 via the ISDN interface unit 219. Accordingly, the CPU 201 judges that there has been reception. In step S501, judgment is made as to whether or not the reception mode is a answering mode, and in the event that the reception mode is not the answering mode, a terminal capable of reception is rung (step S502).

Next, in the event that the reception mode is the answering mode, judgment is made regarding whether or not the necessary resource for the answering action (i.e., the audio recording/reproducing unit 215) is in use (step S503), and in the event that it is in use, judgment is made as to whether the destination of use is an external line or otherwise (step S504). In the event that the results show that the audio recording/reproducing unit 215 is in use with an external line (i.e., in the event that input/output of audio signals is being performed between the audio recording/reproducing unit 215 and the ISDN line 103), no action of sending an audio message or the like to the external line that received the call in step S500 is performed; instead, a "release complete" message (RELCOMP) is sent (step S505) with regard to the call received in step S500.

This "RELCOMP" message tells the call originator that connection with the call originator is not established.

A case wherein the flow proceeds from S504 to S505 would be a case wherein, for example, an outgoing message is being reproduced to the ISDN line 103 in the later-described step S508, or during the recording action in step S510. The recording actions in step S510 include recording an incoming message from the ISDN line 103, and remote reproduction of an incoming message to the ISDN line 103. Also, the flow proceeds from step S504 to step S505 in the event that the conversation at the handset 213 being conducted over the ISDN line 103 is being recorded with the audio recording/reproducing unit 215.

In the event that the audio recording/reproducing unit 215 is not in use with an external line, the audio recording/reproducing resource is used for external lines with priority, so the current operation using the audio recording/reproducing resource is interrupted (step S506), a "response" message (CONNECT) is sent to the network (step S507), and an outgoing message of an audio response message to the effect of "I am presently not able to answer the phone, please leave a message at the tone" is sent out to the ISDN line 103 as a response message from the audio recording/reproducing unit 215 (step S508).

An example of a case wherein the flow would proceed from step S504 to step S506 is, e.g., a situation wherein a message is being recorded to the audio recording/reproducing unit 215 using the handset or an unshown microphone while a message recorded in the audio recording/reproducing unit 215 is being locally reproduced through the speaker 214.

Once an outgoing message is sent, recording is performed (step S510), and the incoming message from the ISDN line 103 is recorded to the audio recording/reproducing unit 215. Now, in the event that control signals such as certain PB signals are received from the ISDN line 103, the incoming message recorded in the audio recording/reproducing unit 215 is read out, and sent to the ISDN line 103.

Also, in step S503, in the event that the audio recording/reproducing resource is not being used at the time of reception, an audio message can be sent, so the actions in the previous step S507 and the subsequent steps are performed.

In step S510, in the event that a reception occurs while making a recording, the flow proceeds from step S502, through step S503 and S504, onto step S505.

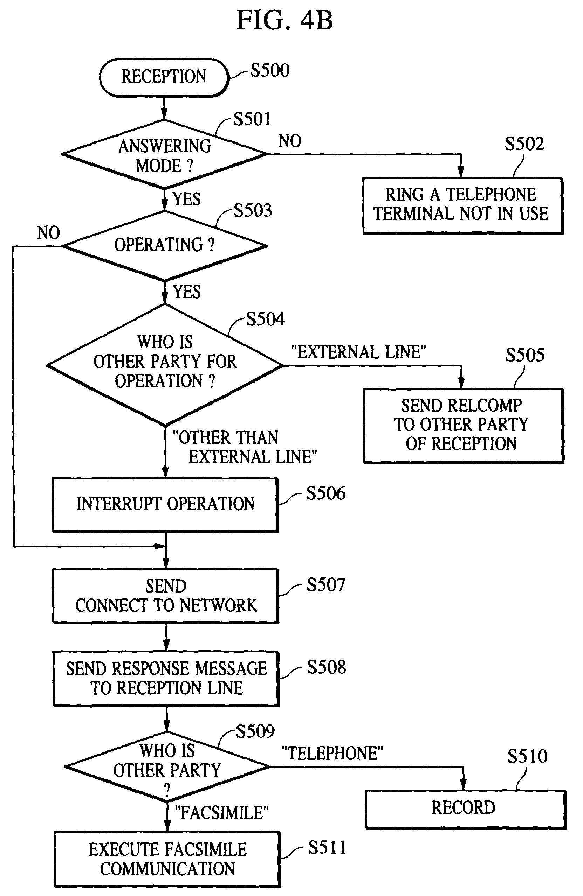

Incidentally, as shown in Fig. 2B, in the event that the apparatus has a facsimile modem 212 and is capable of facsimile communication, as shown in Fig. 4B, the flow judges whether the calling party is a facsimile apparatus or a person (step S509), and in the event that the calling party is a person, recording is performed (step S510), and in the event that a CNG is received and judgment is made that the other party is a facsimile apparatus, FAX reception is performed (step S511). Incidentally, in this case, the message sent out in step S508 would be something to the effect of, "I am presently not able to answer the phone, please leave a message at the tone. If you are sending a facsimile, press the start button now."

In this way, with the present communication apparatus, in the event that there is reception from a line during use of the audio recording/reproducing functions in the answering mode, response is not made to the line to which reception has been made in the event that the audio recording/reproducing functions are operating to receive from an external line, but rather a release complete signal (RELCOMP signal) is sent to the network, thereby notifying the other party that the terminal is busy. On the other hand, in the event that the audio recording/reproducing action being conducted is reproduction or the like of the recorded contents by an operator nearby or an extension slave phone, and not to an external reception, the present communication apparatus interrupts the audio reproducing action, and enables the audio recording/reproducing actions to the external line. Accordingly, not interrupting the reproducing action during reproduction from an external line, and interrupting the reproducing action and starting the recording action for receptions during reproducing action due to the operator being nearby the apparatus, allows multiple lines to be effectively used without forbidding reception.

The above description assumes that communication apparatuses consist of a telephone or facsimile apparatus. However, even switchboards or the like can carry out the present invention, as long as they are apparatuses having functions for connecting two lines and sending response messages.

Now, although the above description involves an arrangement wherein telephones can be connected to the communication apparatus via wireless lines, the present invention is by no means restricted to a communication apparatus to which connection can be made with a telephone via wireless lines.

Also, the above descriptions assumes that the communication line is an ISDN line, but the present invention can also be carried out in apparatuses which handle two analog lines (or two lines or more).

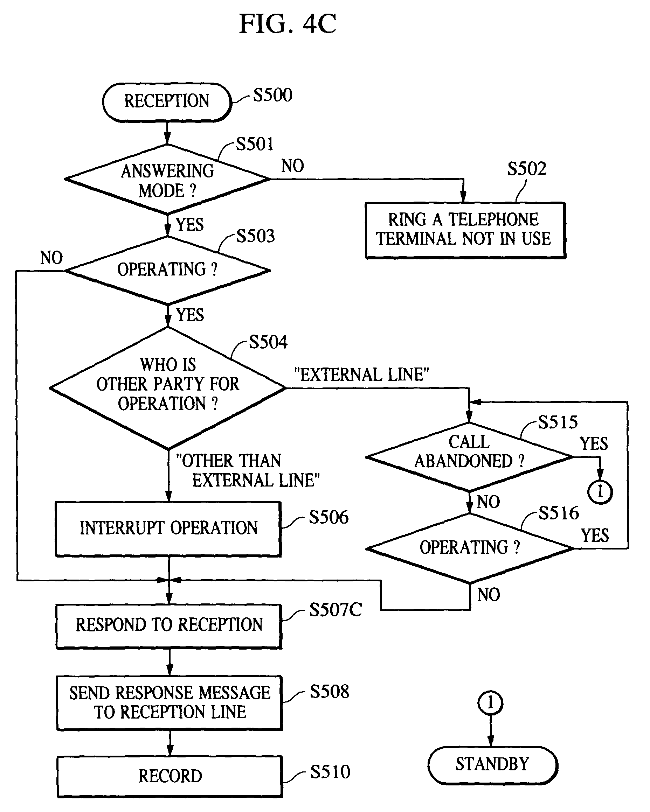

In the case of analog lines, instead of sending a RELCOMP message in step S505, as shown in Fig. 4C, the flow does not answer by rather waits until the call originator gives up the call (step S516). In the event that the audio recording/reproducing unit 215 completes its operation before the call originator gives up the call (step S516), the reception is responded to (step S507C), a response message is sent to the reception line from the audio recording/reproducing unit 215 (step S508), and recording is performed (step S510).

Next, another embodiment of the present invention will be described.

The configuration of the present embodiment is the same as that shown in Fig. 2B.

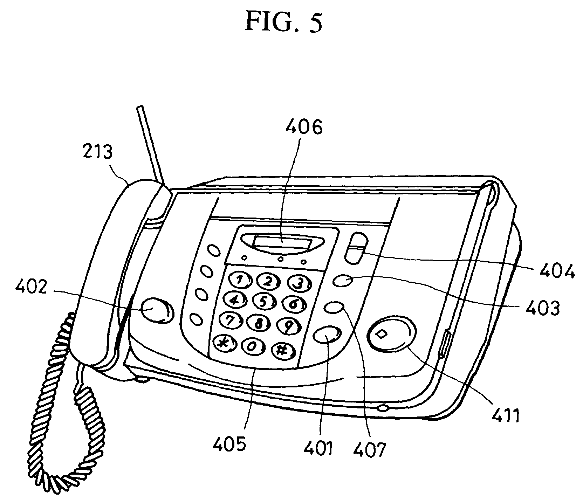

Fig. 5 is an external perspective diagram indicating the configuration of the operating unit of the communication apparatus according to the present invention.

As shown in the figure, the present communication apparatus has a answering mode set key 401, an in-call response mode set key 402, a function key 403, selection keys 404, dial keys 405, a liquid crystal display unit 406, a set key 407, an auto-reception mode set key 411, and a handset 213.

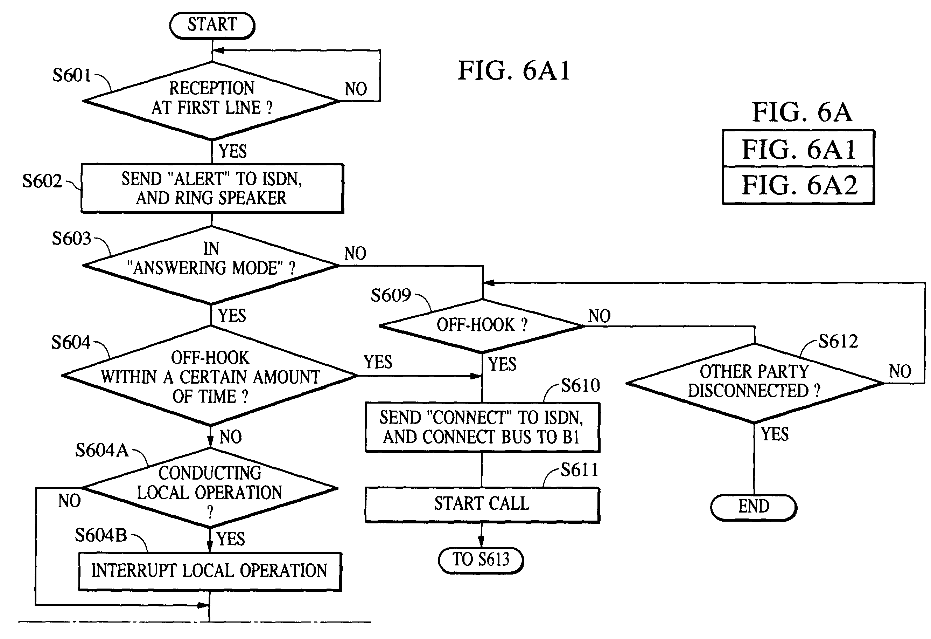

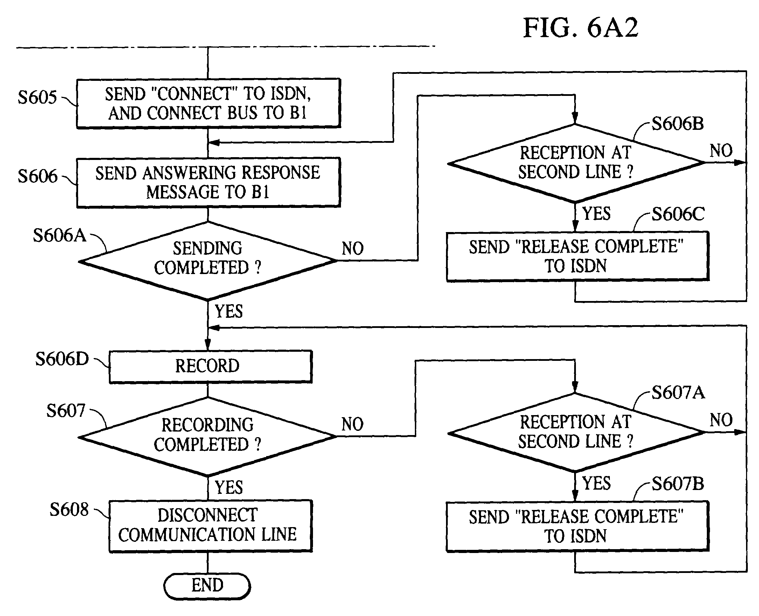

Figs. 6A-6C are flowcharts illustrating the operation of the present embodiment in the event that there is reception in a second line (channel) while talking on a first line. The operations of the present invention will be sequentially described here.

### (1) Method for recording a response message.

With the communication apparatus according to the present embodiment, two types of messages can be registered: one is a standard answering response message, and the other is for reception in the event that a call is already underway on a first line.

The respective recording methods are as follows:

In the event of registering an answering response message, the "function" key 403 is pressed, then the mode is selected with the "selection" keys 404, the "set" key 407 is pressed at the point when the display "answering response message" is displayed on the display unit 406, and the handset 213 is taken off the hook and a message is input. An example of a message might be, "I am presently not able to answer the phone, please leave a message at the tone." The audio message input from the handset 213 is input to the audio recording/reproducing unit 215 via the analog switch 216, and the audio message input to the audio recording/reproducing unit 215 is converted into digital signals and is stored in an internal memory as a first message (answering response message).

The procedures for recording an in-call response message are similar: the "function" key 403 is pressed, then the mode is selected with the "selection" keys 404, the "set" key 407 is pressed at the point when the display "in-call response message" is displayed on the display unit 406, and the handset 213 is taken off the hook and a message is input. The audio message input from the handset 213 is input to the audio recording/reproducing unit 215 via the analog switch 216, and the audio message input to the audio recording/reproducing unit 215 is converted into digital signals and is stored in the internal memory as a second message (in-call response message).

Following the above settings, in the state that the answering mode key 401 has been pressed, in the event that there is no response to the reception for a certain amount of time, the answering response message stored in the audio recording/reproducing unit 215 is sent.

On the other hand, in the state that the in-call response mode key 402 has been pressed, in the event that there is reception to a second line (channel) while a call is being conducted on the first line, the in-call response message stored in the audio recording/reproducing unit 215 is sent.

Now, whether or not the answering mode key 401 and the in-call response mode key 402 have been pressed is recognized by the CPU 206 shown in Fig. 2B, and the state thereof is stored in the RAM 207.

### (2) Operation upon reception

Next, the operation in the event that there is reception on a second line (channel) while a call is being conducted on the first line, will be described with reference to the flowcharts shown in Figs. 6A-6C. Incidentally, the flowcharts shown in Figs. 6A-6C are variations of the flowcharts shown in Figs. 4A-4B, and represents a computer program stored in the ROM 203, in the same way as the flowcharts shown in Figs. 4A-4B.

First, in the event that there is reception on the first line (step S601 in Fig. 6A), a "call set" message (SETUP) is received from the ISDN line 103. The "call set" message is notified to the CPU 201 through the ISDN interface 219, and the CPU 201 creates a "call" message (ALERT) and sends this to the ISDN line 103 through the D channel.

Upon obtaining mode state information from the CPU 206, the CPU 201 rings the speaker 214 (step S602) in order to notify of the reception. As a result, in the event that the mode is the answering mode (step S603) and there is no response for a certain amount of time (step S604), the CPU 201 judges whether local reproducing is being performed wherein a message stored in the audio recording/reproducing unit 215 is being reproduced from the speaker 214 or whether local recording is being performed wherein a message is being recorded to the audio recording/reproducing unit 215 from the speaker of the handset 213 (step S604A).

Then, in the event that judgment is made in step S604A that the audio recording/reproducing unit 215 is conducting local operations, the CPU 201 interrupts the actions thereof (step S604B).

Then, the CPU 201 sends a "response" message (CONNECT) to the ISDN line 103, and upon receiving a "response confirmation" message (CONNECT ACK), controls the path switches 223 and 314, and the analog switch 216, so as to connect the path to the B1 channel (step S605).

Incidentally, in step S604A, the processing in step S605 is performed as well in cases wherein judgment is made that there is no local action.

Then, the answering response message (first message) (space) stored in the audio recording/reproducing unit 215 is subjected to PCM encoding processing at the PCM codec 310 within the PHS processing unit 222, input to the ISDN interface unit 219 via the signal lines 229 and 226, and sent from the B1 channel of the ISDN line 103 (step S606).

Then, in the event that, before completion of sending of the answering response message (step S606A), there is reception on the second line (step S606B), a "release complete" (RELCOMP) message is sent to the ISDN line 103 (step S606C).

Also, once sending of the answering response message is completed (step S606A), recording is performed (step S606D).

Subsequently, the contents spoken by the originating party are subjected to analog conversion by the PCM codec 310, input to the audio recording/reproducing unit 215, and stored as a recorded message.

The audio recording/reproducing unit 215 stores this recorded message and an in-call recorded message in the later-described step S617A.

The recorded message and the in-call recorded message are stored so as to be read out individually.

That is, in the event that a recorded message is stored, pressing the answering mode set key 401 causes the audio recording/reproducing unit 215 to reproduce the recorded message.

On the other hand, in the event that an in-call recorded message is stored, pressing the in-call response mode set key 402 causes the audio recording/reproducing unit 215 to reproduce the in-call recorded message.

In the event that there is reception on the second line (step S607A) before completing the recording of the recorded message (S607), a "release complete" message is sent to the ISDN line 103 (S607B).

Subsequently, completion of the recording of the recorded message from the originating party (S607) disconnects the communication line (S608).

Incidentally, in the event that there is reception of a call during the recording of this recorded message, a "release complete" (RELCOMP) message is sent in the same manner as in step S505 in Fig. 4A.

In the event that an off-hook state is detected (step S609) in step S603 when the mode is not the answering mode, and in the event that the mode is the answering mode and there is response in step S604 within a certain amount of time, a "response" message (CONNECT) is sent to the ISDN line 103 with the D channel, and upon receiving the "response confirmation" message, the path switches 223, 314, and the analog switch 216 are controlled so as to connect the path between the handset 213 and the B1 channel of the ISDN line 103 (step S610), so the conversation is started using the B1 channel of the ISDN, by a path similar to that of the prior answering response message (step S611).

In the event that the mode is not the answering mode, and the handset is not off-hook, the ringing operation is continued until the originating party hangs up, and ends when the originating party hangs up (step S612).

In the state that a conversation is being carried out on the B1 channel (the state in step S611), and there is a new reception from the ISDN line 103, a "call set" message (SETUP) is received from the ISDN line 103 (step S613). The "call set" message (SETUP) is notified to the CPU 201 through the ISDN interface unit 219, and the CPU 201 creates a "call" message (ALERT) and sends this to the ISDN line 103 with the D channel (step S614)

Now, the CPU 201 reads response mode type information from the CPU 206 (step S615). Also, in the event that the audio recording/reproducing unit 215 is performing local operations, the operations are interrupted.

Then, once selection of the in-call response mode is recognized, a "response" message (CONNECT) is sent to the ISDN line 103 with the D channel, thereby controlling the analog switch 216, the path switch-over switch 315 within the PHS processing unit 222, and the path switch-over switch 223.

Consequently, the second audio message (in-call response message) output from the audio recording/reproducing unit 215 is subjected to PCM encoding processing with the PCM codec 311 within the PHS processing unit 222, input to the ISDN interface unit 219 vi the signal lines 230 and 227, and sent from the B2 channel of the ISDN line 103 (step S616).

The above processes allow the call originating party to hear an in-call response message to the effect of, "I am presently on the phone. Please leave your name and phone number; and I will call you as soon as possible."

Subsequently, the contents spoken by the originating party are converted into analog signals by the PCM codec 311, input into the audio recording/reproducing unit 215 and stored as an in-call recorded message (step S617A). Then, once the recording is completed (step S617), the B2 channel is disconnected and the operation is completed (S618).

Next, once the user of the present facsimile apparatus 101 completes the call on the B1 channel, pressing the in-call response mode set key 402 allows the user to hear the stored in-call recorded message.

In the event that the apparatus is not in the in-call answering mode in step S615, an in-call reception sound is output to the handset 213 of the main unit, thereby notifying the user talking on the B1 channel that there has been a reception on the B2 channel (step S619).

Here, in the event that the user has judged that the conversion on the B1 channel cannot be completed and presses the in-call reception mode key 402 (step S620), the flow proceeds to step S616, and an in-call response message is sent.

In the event that the in-call response mode key 402 is not pressed, the in-call reception sound continues to be output until the other party hangs up (step S621), and ends when the other party hangs up.

Also, in step S613, in the event that the call on the B1 channel ends before reception occurs (step S622), the processing ends.

Incidentally, the above description has been made regarding a case wherein the user has responded to a reception in step S609 and a call has started, following which a new reception occurs, but the same process from step S614 is followed even in cases wherein the user has placed a call and a call has started following which a reception occurs.

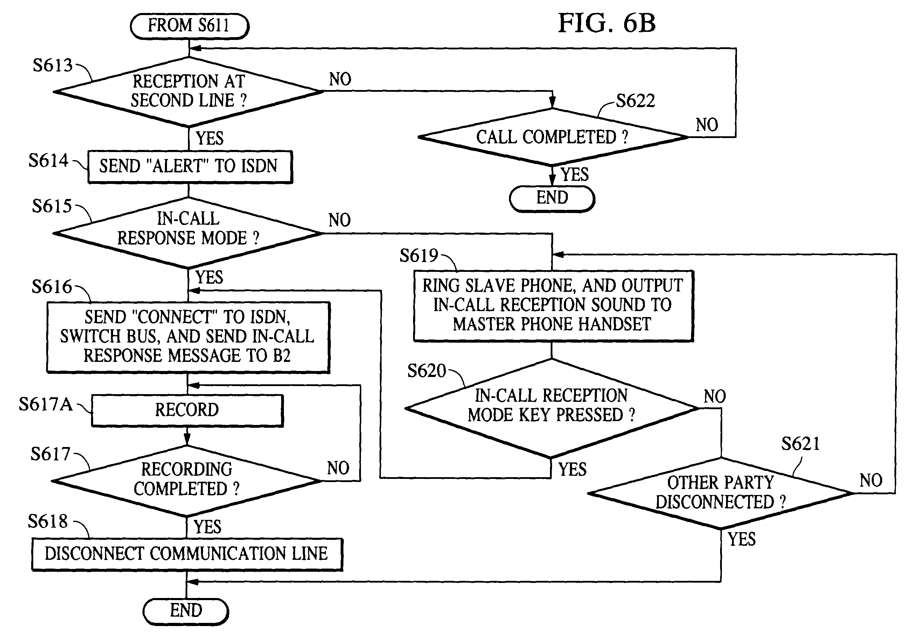

In the above-described Fig. 6B, in the event that the in-call response mode is selected at the time there is reception at the B2 channel, the arrangement is such that a response is immediately made, and the second response message (in-call response message) is sent.

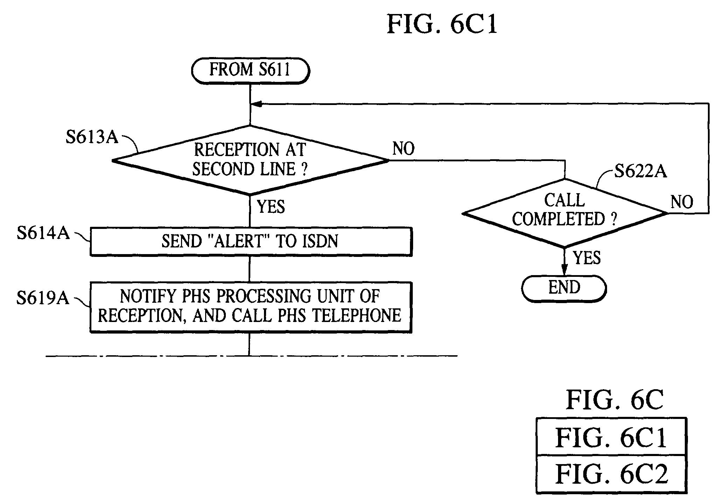

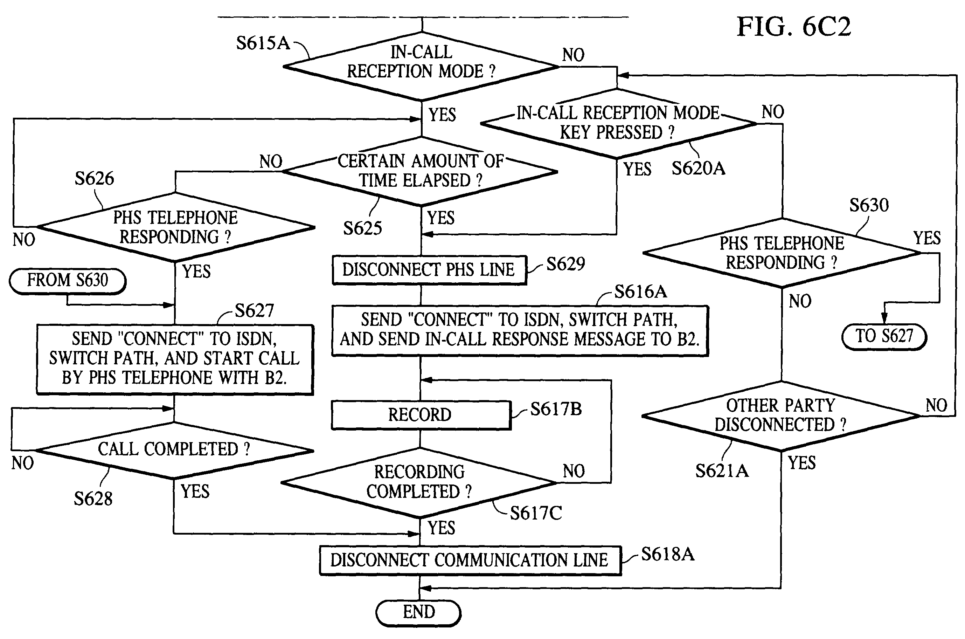

Next, the action of an embodiment arranged such that a slave telephone is rung in the event that there is a reception at the B2 channel, so that response can be made with the slave telephone even in the event that the in-call response mode is selected, will be described with reference to Fig. 6C.

Incidentally, the action from reception on the first line to the call starting, and the action in the event that the answering mode is selected at the time of reception on the first line are the same as those described with reference to Fig. 6A, so the action from S613A on will be described with reference to Fig. 6C.

In this case, upon receiving a "call set" message (SETUP) from the ISDN (step S613A), the CPU 201 returns a "call" message (ALERT) to the ISDN line 103 (step S614A), and simultaneously performs reception notification to the CPU within the PHS processing unit 222 (step S619A), thereby activating a timer. The CPU 301 activates the PHS base band processing unit 303, and calls up the PHS telephone 102.

Next, in the event that the mode is set to the in-call response mode (step S615A), and the PHS telephone 102 responds within a certain amount of time (step S626), a "response" message is sent on the D channel to the ISDN line 103, and a state wherein the originating party and the PHS telephone 102 can communicate using the B2 channel is established (step S627).

Now, in the event that the mode is set to the in-call response mode, and the PHS telephone 102 does not respond within a certain amount of time (step S625), the CPU 201 instructs the CPU 301 that the wireless line is to be disconnected (step S629). In the event that the audio recording/reproducing unit 215 is operating locally, the operations thereof are interrupted.

At the same time, a "response" message (CONNECT) is sent to the ISDN, controlling the analog switch 216, the path switch-over switch 315 within the PHS processing unit 222, and the path switch-over switch 223.

Consequently, the second audio message (in-call response message) output from the audio recording/reproducing unit 215 is subjected to PCM encoding processing at the PCM codec 311 within the PHS processing unit 222, input to the ISDN interface unit 219 via the signal lines 230 and 227, and sent from the B2 channel of the ISDN line 103 (step S616A).

According to the above processing, the originating party hears the message to the effect of, "I am presently on the phone. Please leave your name and phone number; and I will call you as soon as possible," only in the event that no one can answer the phone.

Then, the audio recording/reproducing unit 215 stores the message from the originating party as an in-call message (step S617B). When the recording ends (step S617C), the communication line is disconnected (step S618A).

Incidentally, in the event that the PHS telephone call has ended in step S628 as well, the communication line is disconnected.

Also, in the event that the in-call response mode is not set and the in-call response mode key 402 is pressed (step S620A), the flow proceeds to step S629. In the event that the PHS telephone 102 answers (step S630) , the flow proceeds to step S627. On the other hand, in the event that the other party hangs up (step S621A), the flow ends.

The flow also proceeds to step S614 shown in Fig. 6B in the event that a reception occurs in the event that a call is placed from the present communication apparatus such that the B1 channel is in a communicating state.

In Figs. 6B and 6C, the action occurring at the time of reception when a call is being made with the main unit handset is described. However, the present invention can also be applied in a case where a reception occurs while communicating with a slave PHS telephone 102.

In this case, in the event that the mode is the in-call response mode when there is reception at the B2 channel during the PHS telephone conducting 102 a call using the B1 channel, the in-call response message is sent to the B2 channel.

Also, an arrangement may be made wherein a call sound is output from the speaker 214 of the main unit, and in the event that the receiver is not taken off of the hook following a certain amount of time, the second response message (in-call response message) starts being sent.

Incidentally, the in-call response message is sent in the event that the handset 213 or telephone 102 is in an in-call state, but the answering response message is sent regardless of the state of the handset 213 or the telephone 102, as long as the recording response mode is set.

Also, the arrangement may be such that the above normal answering response message (first message) and in-call response message (second message) for in-call states may be each connected to an analog switch with separate paths, so as to be switched by the analog switch.

Also, these message may be stored at different addresses in the same memory, such that the read-out address is selectively switched according to which message is to be sent.

In Figs. 6A-6C, a situation wherein a new reception occurrs in the state that a call has been started in response to a reception from the ISDN line 103 (step S611) is described, but the present invention can be applied in cases wherein there has been reception in the state that a call has been started by the present communication apparatus originating a call.

Also, the present invention may be applied to facsimile apparatuses, telephones, switchboards or the like, as long as they are apparatuses having functions for connecting two lines and sending response messages.

Further, the communication line connection is not restricted to an ISDN line; rather, the present invention exhibits the same advantages with apparatuses containing two analog lines.

Next, another embodiment of the present invention will be described.

The configuration of the present embodiment is the same as that shown in Figs. 2B and 5.

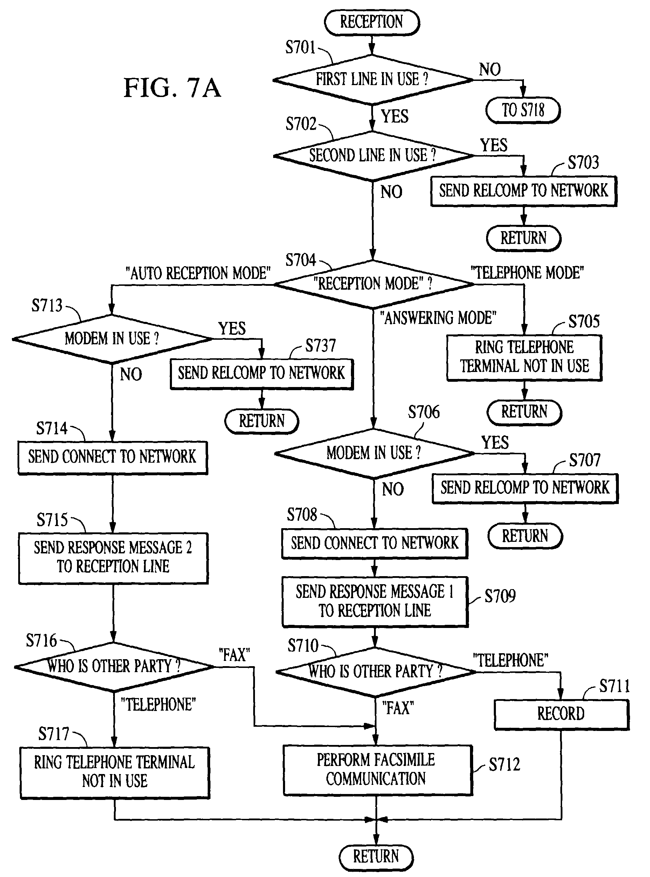

Figs. 7A-7B are action flowcharts for a facsimile apparatus according to the present invention, illustrating the case in which there is a reception. The flowcharts in Figs. 7A-7B are variations of the flowcharts in Figs. 4A-4C, and as with the flowcharts shown in Figs. 4A-4C, represents a computer program stored in the ROM 203.

First, in the event that there is a reception, a "call set" message (SETUP) is sent from the ISDN line 103 via the ISDN interface unit 219. Accordingly, the CPU 201 judges that a reception has occurred.

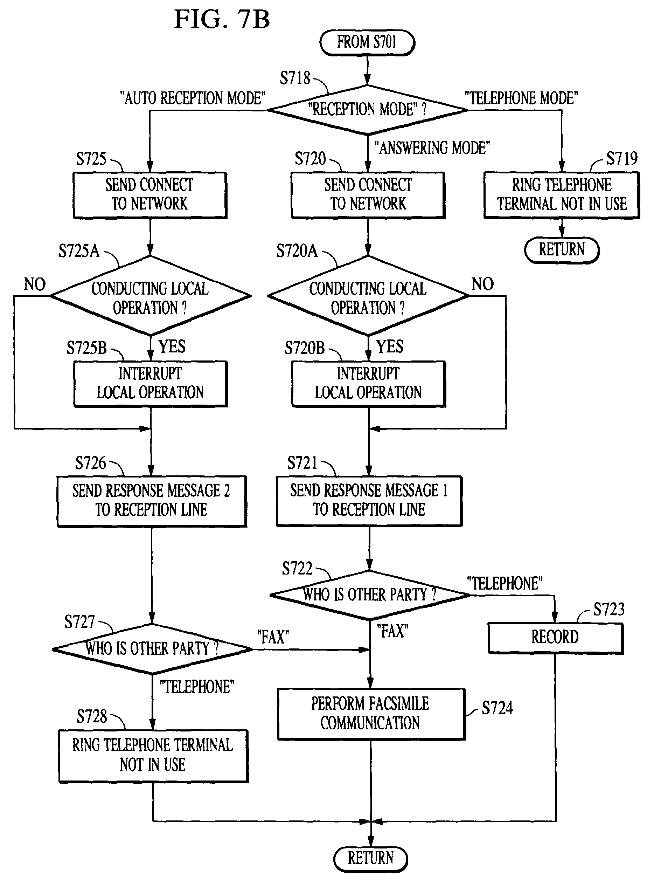

In step S701, judgment is made regarding whether or not the first line is in use or not, and if not busy, the judgment results for step S701 are "N", and the actions from step S718 on in Fig. 7B are carried out.

Next, in the event that there has been a reception while the first line is busy (i.e., in the event that the judgment results in step S701 are "Y"), judgment is made regarding whether or not the second line is busy (step S702). In the event that the second line is busy, (i.e., "Y" in step S702), the call cannot be received, so the CPU 201 sends a "release complete" message (RELCOMP) to the network 103 via the ISDN interface unit 219, thereby making notification that the call cannot be received (step S703).

In the event that the second line is not busy (i.e., "N" in step S702), the CPU 201 obtains mode status information from the CPU 206 (step S704), and changes the actions according to the mode (i.e., the three-way selection in step S704).

Consequently, in the event that the mode is the "telephone mode", an action for calling up a telephone terminal not in use is performed, and a "call" message (ALERT) is set to the network 103 (step S705). Specifically, unless the facsimile apparatus itself is in use, a call sound is rung from the speaker 214, and unless the PHS slave telephones 102-1 and 102-2 are not in use, the PHS processing unit 222 instructs the PHS slave telephones to be called.

Incidentally, in the event that the answering mode set key 401 and the auto-reception mode set key 411 shown in Fig. 5 have not been pressed, the mode is the telephone mode. Also, in the event that the answering mode set key 401 is pressed, the mode is the answering mode, and in the event that the auto-reception mode set key 411 is pressed, the mode is the auto-reception mode.

In the event that the mode obtained in step S704 is the "answering mode", confirmation is made whether or not the modem 212 is in use (step S706), and if the modem 212 is in use (i.e., "Y" in step S706), a "release complete" message is sent to the network 103 (step S707), since a response message cannot be sent.

Incidentally, in the event that the audio recording/reproducing unit 215 is connected to the first line and is performing a reproducing or recording operation, i.e., in the event that the audio recording/reproducing unit 215 is performing a remote operation, the judgment passed in step S706 is "Y", for the modem being used, and a "release complete" message is sent in step S707.

Also, in the event that the modem 212 is not in use (i.e., "N" in step S706), a "response" message (CONN) is sent to the network 103 (step S708). Incidentally, in the event that the audio recording/reproducing unit 215 is performing local reproducing wherein a message is reproduced from the speaker 214, or the audio recording/reproducing unit 215 is performing local recording wherein a message is recorded from a microphone in the handset 213, the local action is interrupted.

Then, the response message 1 to the effect of, "I am presently not able to answer the phone, please leave a message at the tone. If you are sending a facsimile, press the start button now." is sent to the line from the modem 212 (step S709). Next, the flow judges whether the calling party is a facsimile apparatus or a person (telephone) (step S710), and in the event that the calling party is a person, recording is performed (step S711), and in the event that a CNG is received and judgment is made that the other party is a facsimile apparatus, FAX reception is performed (step S712).

Also, in the event that the reception mode obtained instep S704 is the "auto-reception mode", the flow checks whether or not the modem 212 is in use (step S713), and in the event that the modem 212 is in use (i.e., "Y" in step S713), a "release complete" message is sent to the network 103 (step S737), since a response message cannot be sent.

Incidentally, in the event that the audio recording/reproducing unit 215 is connected the first line and is performing a reproducing or recording operation, i.e., a remote operation, the judgment passed in step S713 is "Y", for the modem being in use, and a "release complete" message is sent in step S737.

Also, in the event that the modem 212 is not in use, a "response" message (CONN) is sent to the network 103 (step S714). Incidentally, in the event that the audio recording/reproducing unit 215 is performing local reproducing wherein a message is reproduced from the speaker 214, or the audio recording/reproducing unit 215 is performing local recording wherein a message is recorded from a microphone in the handset 213, the local action is interrupted.

Then, a response message 2 to the effect of "Your facsimile will be received. If you are sending a facsimile, press the start button now. If you are placing a telephone call, please wait." is sent to the line from the modem 212 (step S715).

Next, the flow judges whether the calling party is a facsimile apparatus or a person (step S716), and in the event that the calling party is a person, a communication terminal not in use is called (step S717), and in the event that a CNG is received and judgment is made in step S716 that the other party is a facsimile apparatus, FAX reception is performed (step S712).

Accordingly, even in the event that there is reception at the second line, meaningless receptions wherein audio response cannot be made can be avoided, and in the case of the telephone mode, reception can be made at two lines.

In step S701, in the event that the first line is not in use, the flow proceeds to step S718 in Fig. 7B, the CPU 201 obtains the mode status information form the CPU 206, and the subsequent action splits according to the mode.

In the event that the mode is the "telephone mode", an action for calling up a telephone terminal not in use is performed, and a "call" message (ALERT) is set to the network (step S719). Specifically, unless the facsimile apparatus itself is in use, a call sound is rung from the speaker 214, and unless the PHS slave telephones 102-1 and 102-2 are not in use, the PHS processing unit 222 instructs the PHS slave telephones to be called (step S719).

In the event that the reception mode obtained in step S718 is the "answering mode", a "response" message (CONN) is sent to the network 103 (step S720).

Then, judgment is made regarding whether the audio recording/reproducing unit 215 is performing local reproducing wherein a message is reproduced from the speaker 214, or the audio recording/reproducing unit 215 is performing local recording wherein a message is recorded from a microphone in the handset 213 (step S720A). In the event that local reproducing or local recording is being conducted, the local action is interrupted (S720B).

After interrupting the local action, or in the event that there is no local action, the response message 1 to the effect of, "I am presently not able to answer the phone, please leave a message at the tone. If you are sending a facsimile, press the start button now." is sent to the line from the modem 212 (step S721).

Next, the flow judges whether the calling party is a facsimile apparatus or a person (step S722), and in the event that the calling party is a person, recording is performed (step S723), and in the event that a CNG is received and judgment is made that the other party is a facsimile apparatus, FAX reception is performed (step S724).

In the event that the reception mode obtained in step S718 is the "auto-reception mode", a "response" message (CONN) is sent to the network 103 (step S725).

Then judgment is made regarding whether the audio recording/reproducing unit 215 is performing local reproducing wherein a message is reproduced from the speaker 214, or the audio recording/reproducing unit 215 is performing local recording wherein a message is recorded from a microphone in the handset 213 (step S725A). In the event that local reproducing or local recording is being conducted, the local action is interrupted (S725B).

In the event that the local action has been interrupted, or in the event that no local action was being performed, a response message 2 to the effect of "Your facsimile will be received. If you are sending a facsimile, press the start button now. If you are placing a telephone call, please wait." is sent to the line from the modem 212 (step S726).

Next, the flow judges whether the calling party is a facsimile apparatus or a person (step S727), and in the event that the calling party is a person, a communication terminal not in use is called (step S728), and in the event that a CNG is received and judgment is made that the other party is a facsimile apparatus, FAX reception is performed (step S724).

Now, though the present invention has been described above based on preferred embodiments, the present invention is by no means restricted to such embodiments; rather, many variations can be made within the scope of the Claims.

For example, the present invention may be applied to telephones, switchboards, etc., as long as they are apparatuses having functions for connecting two lines and sending response messages.

Also, an arrangement may be used wherein two analog lines are contained instead of the ISDN line, as the communication line.

Also, the present invention may be applied to a system comprised of multiple apparatuses (e.g., a host computer, interface equipment, reader, printer, etc.), or to an apparatus comprising a single device (e.g., a photocopier, facsimile apparatus, etc.).

The present invention may be carried out by supplying storage medium upon which is recorded software program code capable of realizing the functions of the above-described embodiments to a system or device, with the computer (or CPU or MPU) of the system or device reading and executing the program code stored in the storage medium thereof. In this case, the program code itself read from the storage medium realizes the functions of the embodiments, and the storage medium which stores the program code comprises the present invention.

Examples of storage medium which may be used for supplying the program code include, e.g., floppy disk, hard disk, optical disk, optical-magnetic disk, CD-ROM, CD-R, magnetic tape, non-volatile memory card, ROM, and so forth.

Also, the present invention includes cases wherein not only are the functions of the above-described embodiments realized by means of executing the program code which the computer has read, but the operating system or the like operating on the computer performs part or all of the actual processing based on the instructions of the program code, this processing realizing the aforementioned functions.

Further, the present invention includes cases wherein following the program code read from the storage medium being written to the memory provided to function extension boards inserted to the computer or function extension units connected to the computer, the CPU or the like provided to the function extension board or the function extension unit performs part or all of the actual processing based on the instructions of the program code, this processing realizing the functions of the aforementioned embodiments.

In the event of applying the present invention to the above storage medium, the storage medium stores program code corresponding with the above-described flowcharts.

## Claims

1. A communication apparatus for performing communication via a communication channel, comprising:
memory means (215) for answering an incoming call and for storing a message,
characterized by
interrupting means (201) for interrupting an operation of said memory means in accordance with a state of the communication channel when the incoming call is received.

2. An apparatus according to claim 1, wherein said memory means stores an incoming message.

3. An apparatus according to claim 1, wherein said memory means stores an outgoing message.

4. An apparatus according to claim 1, wherein said memory means sends the stored message via the communication channel or reproduces the stored message to a speaker (214) without sending the stored message via the communication channel.

5. An apparatus according to claim 1, wherein said interrupting means interrupts operation of said memory means and responds to the incoming call in a state where said memory means is not connected to the communication channel.

6. An apparatus according to claim 1, wherein said interrupting means interrupts operation of said memory means and sends the stored message to the communication channel.

7. An apparatus according to claim 1, wherein said interrupting means interrupts operation of said memory means and stores a message from the communication channel.

8. An apparatus according to claim 1, wherein said interrupting means includes sending means for sending a predetermined control signal indicating that a connection with a calling party is not established in a case where operation of said memory means is not interrupted.

9. An apparatus according to claim 1, wherein said interrupting means interrupts operation of said memory means performing without the communication channel.

10. An apparatus according to claim 1, wherein said interrupting means does not interrupt operation of said memory means performing with the communication channel.

11. An apparatus according to claim 1, wherein said memory means stores a first message to be reproduced in a case where communicating means is in a communication state and stores a second message.

12. An apparatus according to claim 11, wherein said memory means reproduces one of the first and second messages in response to an incoming call.

13. An apparatus according to claim 11, wherein said memory means reproduces the first message in response to a manual operation after an incoming call is received.

14. An apparatus according to claim 11, wherein said memory means reproduces the first message after a ringing operation.

15. An apparatus according to claim 1, wherein said memory means reproduces a message in a case where means for enabling transmission of the message is not used.

16. An apparatus according to claim 15, wherein said means for enabling includes modem means.

17. An apparatus according to claim 15, wherein an incoming call is refused in a case where said means for enabling is used.

18. An apparatus according to claim 15, wherein said memory means reproduces the message in a case where an automatic response mode is set.

19. A method for answering an incoming call using a memory (215) for storing a message transmitted via a communication channel, comprising a step of:
answering (S510, S606, S721, S726) the incoming call using the memory,
characterized by a step of:
interrupting (S506, S604B, S720B, S725B) an operation of the memory in accordance with a state of the communication channel when the incoming call is received; and
answering the incoming call using the memory.

20. A method according to claim 19, wherein the stored message is sent via the communication channel or reproduced to a speaker (214) without sending via the communication channel.

21. A method according to claim 19, wherein operation of the memory is interrupted and the memory is used for answering the incoming call in a state where the memory is not connected to the communication channel.

22. A method according to claim 19, wherein operation of the memory performing without the communication channel is interrupted.

23. A method according to claim 19, wherein operation of the memory performing with the communication channel is not interrupted.

24. A method according to claim 19, wherein first and second messages are stored in the memory, and the first message is reproduced in a case where a speech unit is used for communication.

25. A method according to claim 19, wherein a message stored in the memory is reproduced in a case where means for enabling transmission of the message is not used.

26. A computer program or a memory medium for storing a computer program, comprising a step of:
answering (S510, S606, S721, S726) an incoming call using a memory (215) storing a message transmitted via a communication channel,
characterized by a step of:
interrupting (S506, S604B, S720B, S725B) an operation of the memory in accordance with a state of the communication channel when the incoming call is received.

27. A computer program or a memory medium according to claim 26, wherein the stored message is sent via the communication channel or reproduced to a speaker without sending via the communication channel.

28. A computer program or a memory medium according to claim 26, wherein operation of the memory is interrupted and the memory is used for responding to the incoming call in a state where the memory is not connected to the communication channel.

29. A computer program or a memory medium according to claim 26, wherein operation of the memory performing without the communication channel is interrupted.

30. A computer program or a memory medium according to claim 26, wherein operation of the memory performing with the communication channel is not interrupted.

31. A computer program or a memory medium according to claim 26, wherein first and second messages are stored in the memory, and the first message is reproduced in a case where a speech unit is used for communication.

32. A computer program or a memory medium according to claim 26, wherein a message stored in the memory is reproduced in a case where means for enabling transmission of the message is not used.

33. A communication apparatus comprising:
communicating means (213) for communicating via a communication channel; and
memory means (215) for storing first and second massages to be transmitted selectively in response to an incoming call via the communication channel and for storing a third message when the second message is transmitted,
characterized in that
the first message is transmitted in a case where said communicating means is communicating when the incoming call is received.

34. An apparatus according to claim 33, wherein said memory means stores a fourth message when the first message is transmitted.

35. A method for communicating via a communication channel, comprising steps of:
transmitting (S606, S616, S616A) one of first and second messages in response to an incoming call; and
storing (S606D) a third message when the second message is transmitted,
characterized in that
the first message is transmitted in a case where said communicating means is communicating when the incoming call is received.

36. A method according to claim 35, wherein a fourth message is stored when the first message is transmitted.

37. A computer program or a memory medium for storing a computer program, comprising steps of:
transmitting (S606, S616, S616A) one of first and second messages in response to an incoming call; and
storing (S606D) a third message when the second message is transmitted,
characterized in that
the first message is transmitted in a case where said communicating means is communicating when the incoming call is received.

38. A computer program or a memory medium according to claim 37, wherein a fourth message is stored when the first message is transmitted.

39. A communication apparatus comprising,
memory (215) for storing an audio message to be transmitted in response to an incoming call; and
enabling means (212) for enabling transmission of the audio message,
characterized by
refusing means (201) for refusing the incoming call in a case where said enabling means is used.

40. An apparatus according to claim 39, wherein said enabling means includes modem means.

41. An apparatus according to claim 39, wherein said refusing means refuses the incoming call in a case where one of a plurality of communication channels and said enabling means are used.

42. A method for refusing an incoming call, comprising steps of:
refusing (S706, S737) an incoming call; and
transmitting (S709, S715) an audio message,
characterized in that
the incoming call is refused in a case where a modem is used, and
the audio message is transmitted in a case where the modem is not used.

43. A method according to claim 42, wherein the incoming call is refused in a case where one of a plurality of communication channels and said enabling means are used.

44. A computer program or a memory medium for storing a computer program comprising steps of:
refusing (S706, S737) an incoming call; and
transmitting (S709, S715) an audio message,
characterized in that
the incoming call is refused in a case where a modem is used, and
the audio message is transmitted in a case where the modem is not used.

45. A computer program or a memory medium according to claim 44, wherein the incoming call is refused in a case where one of a plurality of communication channels and said enabling means are used.
